# EUROPEAN PATENT SPECIFICATION

(11) **EP 4 600 870 B1**
(45) Date of publication and mention of the grant of the patent: **21.10.2026**
(21) Application number: 25155500.9
(22) Date of filing: 03.02.2025
(51) Int. Cl.: G06N 3/082

(54) **METHOD AND SYSTEM FOR DEEP NEURAL NETWORK MODEL SIZE REDUCTION BY LAYER AND FILTER ELIMINATION**
VERFAHREN UND SYSTEM ZUR TIEFEN MODELLGRÖSSENREDUZIERUNG IN EINEM NEURONALEN NETZWERK DURCH SCHICHT- UND FILTERELIMINIERUNG
PROCÉDÉ ET SYSTÈME DE RÉDUCTION DE TAILLE DE MODÈLE DE RÉSEAU NEURONAL PROFOND PAR ÉLIMINATION DE COUCHE ET DE FILTRE

(30) Priority: 09.02.2024 IN 202421008985
(43) Date of publication of application: 13.08.2025
(73) Proprietor: Tata Consultancy Services Limited, Maharashtra (IN)
(72) Inventor: SAHU, Ishan, 700135 Kolkata, West Bengal (IN); UKIL, Arijit, 700135 Kolkata, West Bengal (IN); BISWAS, Mridul, 700135 Kolkata, West Bengal (IN); PAL, Arpan, 700135 Kolkata, West Bengal (IN); MAJUMDAR, Angshul, 110020 New Delhi (IN)
(74) Representative: Goddar, Heinz J.

(56) References cited:
- SARA ELKERDAWY ET AL: "To Filter Prune, or to Layer Prune, That Is The Question", ARXIV.ORG, CORNELL UNIVERSITY LIBRARY, 201 OLIN LIBRARY CORNELL UNIVERSITY ITHACA, NY 14853, 11 October 2020 (2020-10-11), XP081783072
- YANWEI FU ET AL: "Exploring Structural Sparsity of Deep Networks via Inverse Scale Spaces", ARXIV.ORG, CORNELL UNIVERSITY LIBRARY, 201 OLIN LIBRARY CORNELL UNIVERSITY ITHACA, NY 14853, 21 April 2022 (2022-04-21), XP091188544
- XIAOHAN CHEN ET AL: "The Elastic Lottery Ticket Hypothesis", ARXIV.ORG, CORNELL UNIVERSITY LIBRARY, 201 OLIN LIBRARY CORNELL UNIVERSITY ITHACA, NY 14853, 28 October 2021 (2021-10-28), XP091066793
- ANGELA FAN ET AL: "Reducing Transformer Depth on Demand with Structured Dropout", ARXIV.ORG, CORNELL UNIVERSITY LIBRARY, 201 OLIN LIBRARY CORNELL UNIVERSITY ITHACA, NY 14853, 25 September 2019 (2019-09-25), XP081483126

## Description

### CROSS-REFERENCE TO RELATED APPLICATIONS AND PRIORITY

The present application claims priority to Indian application no. 202421008985, filed on February 9, 2024.

### TECHNICAL FIELD

The present invention generally relates to the field of deep learning, and, more particularly, to a method and system for deep neural network model size reduction by layer and filter elimination.

### BACKGROUND

Deep neural network models are used for many practical applications in various domains. For example, Large Language Models (LLMs) are massive transformer models consisting of billions of parameters (for example, NVIDIA Megatron-LM consists of more than 10 billion parameters) requiring more than a few Gigabytes of memory just to store the weight parameters. In other domains like healthcare, the classification model size is usually smaller than LLMs but may not be suitable for deploying in the relevant hardware such as edge devices. For example, detection of atrial fibrillation (a type of critical cardiovascular disease) condition from single-lead Electrocardiogram (ECG) recordings is effectively performed by a 34-layer convolutional neural network model with residual network which has a size of more than 100 MB. This model can be pruned by 98% using pruning techniques such as Lottery Ticket Hypothesis (LTH) without significantly reducing the accuracy of the model (perhaps within 1%). The pruning process theoretically removes the parameters that do not significantly contribute towards the model's performance and which are not useful in the development of the computational models.

However, the parameters (specifically, the weight parameters) occupy the memory while their values are made zero. These zero-valued weights do not contribute to the model's performance but occupy memory and therefore results in no change in the model's memory size. Thus, these models cannot be used for practical purpose of edge deployment that requires smaller model size owing to its memory constraint. Similarly, different sensor signals, which are predominantly time series data, need to be analyzed by large neural network models to enable the development of number of practical applications in domains such as healthcare, automobiles, power and utilities. For example, a residual network-based model which was developed for time series classification problem performs significantly well in diverse set of time series signals including sensor signals. The memory size of the model is around 10 MB. Suppose this model has to be deployed over edge devices and sensors including accelerometer, ECG, smart meter, smart watch in Internet of Things (IoT) backbone. These devices and sensors usually consist of tiny microcontrollers with less than 1 MB memory size; hence, the deployable model size has to be reduced to fit into the constraints set by the edge hardware with minimal effect on its performance. Document (SARA ELKERDAWY ET AL: "To Filter Prune, or to Layer Prune, That Is The Question ") discloses recent advances in pruning of neural networks have made it possible to remove a large number of filters or weights without any perceptible drop in accuracy. The number of parameters and that of FLOPs are usually the reported metrics to measure the quality of the pruned models. However, the gain in speed for these pruned models is often overlooked in the literature due to the complex nature of latency measurements. In this paper, we show the limitation of filter pruning methods in terms of latency reduction and propose LayerPrune framework. LayerPrune presents a set of layer pruning methods based on different criteria that achieve higher latency reduction than filter pruning methods on similar accuracy. The advantage of layer pruning over filter pruning in terms of latency reduction is a result of the fact that the former is not constrained by the original model's depth and thus allows for a larger range of latency reduction. For each filter pruning method we examined, we use the same filter importance criterion to calculate a per-layer importance score in one-shot. We then prune the least important layers and fine-tune the shallower model which obtains comparable or better accuracy than its filter-based pruning counterpart. This one-shot process allows to remove layers from single path networks like VGG before finetuning, unlike in iterative filter pruning, a minimum number of filters per layer is required to allow for data flow which constraint the search space. To the best of our knowledge, we are the first to examine the effect of pruning methods on latency metric instead of FLOPs for multiple networks, datasets and hardware targets (Abstract).

### SUMMARY

Embodiments of the present disclosure present technological improvements as solutions to one or more of the above-mentioned technical problems recognized by the inventors in conventional systems. For example, in one embodiment, a method for deep neural network model size reduction by layer and filter elimination is as disclosed in claim 1.

In another aspect, a system for deep neural network model size reduction by layer and filter elimination is as disclosed in claim 6.

In yet another aspect, there are provided one or more non-transitory machine-readable information storage mediums comprising one or more instructions which when executed by one or more hardware processors cause a method for deep neural network model size reduction by layer and filter elimination is as disclosed in claim 11.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for deep neural network model size reduction by layer and filter elimination, according to some embodiments of the present disclosure.
FIG. 2 is a flow diagram illustrating method for deep neural network model size reduction by layer and filter elimination, according to some embodiments of the present disclosure.
FIG. 3 is a graph illustrating accuracy penalty incurred for model size reduction of a ResNet model trained on UCR datasets with target model size constraint < 2MB, according to some embodiments of the present disclosure.
FIG. 4 is a graph illustrating accuracy penalty incurred for model size reduction of a ConvNet model trained on UCR datasets with target model size constraint < 500KB, according to some embodiments of the present disclosure.
FIG. 5 is a graph illustrating accuracy penalty incurred for model size reduction of a ConvNet model trained on UCR datasets with target model size constraint < 50KB, according to some embodiments of the present disclosure.
FIG. 6 is a graph illustrating size reduction factor δ with loss in accuracy < 1% by performing model size reduction of a ResNet model trained on UCR datasets, according to some embodiments of the present disclosure.
FIG. 7 is a graph illustrating size reduction factor δ with loss in accuracy < 2% by performing model size reduction of a ResNet model trained on UCR datasets, according to some embodiments of the present disclosure.
FIG. 8 is a graph illustrating size reduction factor δ with loss in accuracy < 1% by performing model size reduction of a ConvNet model trained on UCR datasets, according to some embodiments of the present disclosure.
FIG. 9 is a graph illustrating size reduction factor δ with loss in accuracy < 2% by performing model size reduction of a ConvNet model trained on UCR datasets, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Presence of large number of parameters that enable deep learning (DL) models (alternatively referred as deep neural network (DNN) model) to gain strong expressive power hinder the development and deployment of such models on resource-constrained edge devices that are able to render practically useful applications. State-of-the-art model pruning techniques, such as Lottery ticket hypothesis (LTH)-based model pruning, can potentially optimize DL or DNN models by reducing the parameter space. Such pruning techniques identify a subset of network parameters that is able to provide similar performance as that of the original model resulting in a sub-network that is less prone to over-fitting. However, the pruning techniques only produce zero-weight parameters but do not remove them completely, thus the model size in terms of memory occupancy remains the same. The zero-weight parameters cannot be deleted entirely as it results in distortion of the structure of the model.

Consider a DNN model 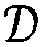 that demonstrates a test accuracy *τ*, has total number of trainable parameters *θ* and occupies a memory size of *K* KB. A pruning technique applied on the DNN model parameterizes weights W resulting in a sparse model (alternatively referred as subnetwork 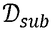 of the DNN model) which is parameterized by *m*⊙ 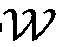 , where *m* ∈ 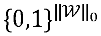 is a pruning mask and ||. ||₀ represents L₀ norm that counts total number of non-zero elements. The pruning mask is responsible for inducing sparsity to the DNN model and the sparse model is sparsified by the sparsity parameter $s = 1 - \frac{{\left‖m\right‖}_{0}}{{\left‖W\right‖}_{0}}$ and memory gain parameter 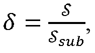 where 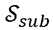 is memory size (in KB) to store weight parameters of the sparse model 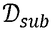 . Suppose test accuracy of the sparse model 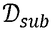 is *τ_{sub},* the challenge is that *τ* - *τ_{sub}* « *ε* « 1, where *ε* is acceptable performance penalty, typically *ε* ≈ 2%. While the sparse model can be easily obtained by any pruning technique such as Lottery Ticket Hypothesis (LTH), the resulting sparse model does not provide any memory gain, i.e., *δ* = 1 since the pruned weights still remain in the DNN model as zero values. Thus, the sparse model cannot be used in memory constrained devices. A 100MB DNN model 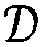 results in a sparse model of 100MB size (*δ* = 1) but with substantial number of weight parameters pruned to zero values (s → 1). But in a practical scenario the requirement is *δ* » 1, *s* → 1 and *ε* « 1.

In order to overcome the above-mentioned drawbacks of conventional pruning techniques, embodiments of present disclosure provide a method and system for deep neural network (DNN) model size reduction by layer and filter elimination. The method prunes a given DNN model using a pruning technique such as LTH which sets one or more weights in the DNN model to zero to obtain a sparse model. Further, the method uses the distribution of sparsity in the sparse model to make structured edits to the model which reduces or removes structured components (more particularly one or more layers and filters within the layers), effectively reducing the model size. This size reduction is guided by target performance penalty and size constraints. Thus, the method of present disclosure effectively removes the weight parameters in the memory and constructs a reduced yet accurate model, which in turn helps in deploying the model in different edge devices and resource-constrained microcontrollers since the resulting well-performing smaller compact DNN models can be fit in the edge device or microcontroller's memory.

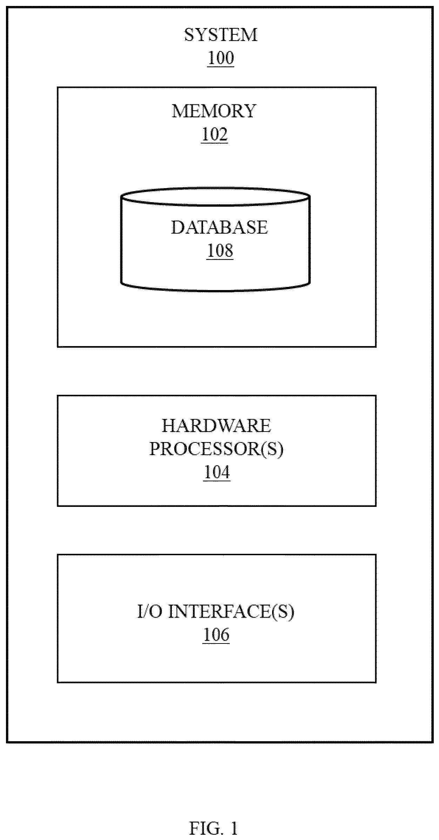

Referring now to the drawings, and more particularly to FIGS. 1 to 9, where similar reference characters denote corresponding features consistently throughout the figures, there are shown preferred embodiments, and these embodiments are described in the context of the following exemplary system and/or method.

FIG. 1 illustrates an exemplary block diagram of a system for deep neural network (DNN) model size reduction by layer and filter elimination, according to some embodiments of the present disclosure. In an embodiment, the system 100 includes one or more processors (104), communication interface device(s) (106) or Input/Output (I/O) interface(s) (106) or user interface (106), and one or more data storage devices or memory (102) operatively coupled to the one or more processors

(104). The one or more processors (104) that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

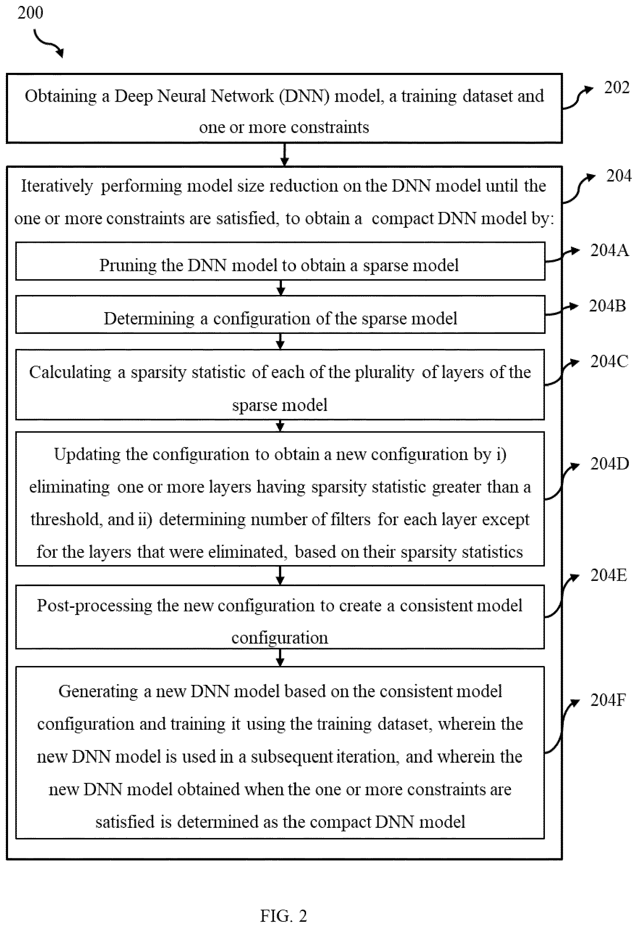

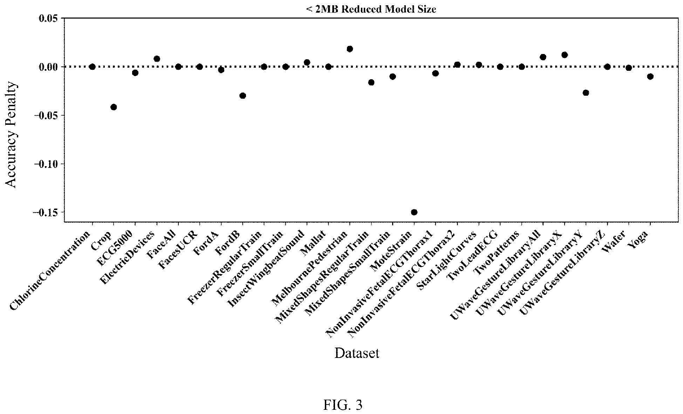

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagram depicted in FIG. 2, and experimental results illustrated in FIGS. 3 to 9 for deep neural network (DNN) model size reduction by layer and filter elimination.

In an embodiment, the system 100 comprises one or more data storage devices or the memory (102) operatively coupled to the processor(s) (104) and is configured to store instructions for execution of steps of the method (200) depicted in FIG. 2 by the processor(s) or one or more hardware processors (104). The steps of the method of the present disclosure will now be explained with reference to the components or blocks of the system 100 as depicted in FIG. 1, the steps of flow diagrams as depicted in FIG. 2, and experimental results illustrated in FIGS. 3 to 9. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

FIG. 2 is a flow diagram illustrating a method 200 for DNN model size reduction by layer and filter elimination, according to some embodiments of the present disclosure. At step 202, the one or more hardware processors 104 are configured to obtain a Deep Neural Network (DNN) model, a training dataset, and one or more constraints. The DNN model (alternatively referred as Deep Learning (DL) model) is a trained deep neural network such as a large language model, ECG (Electrocardiogram) signal classification model and the like. As understood by a person skilled in the art, the DNN model has a plurality of layers including an input layer, one or more hidden layers and an output layer. Each of the plurality of layers comprise a plurality of neurons and a plurality of filters associated with each of the plurality of neurons. Filters are applied on an input to the layer to extract specific features of the input. Interconnection between neurons of adjacent layers are associated with numerical values called weights representing strength of interconnection. The training dataset obtained as input is the same dataset which was used to train the deep neural network. The one or more constraints obtained as input comprise (i) a target model size which is the desired size of a compact DNN model obtained by performing step 204 of the method 200 and (ii) one or more performance penalties which set a bound on performance parameters of the compact DNN model in terms of accuracy, sensitivity, specificity, F1-score and the like. Different performance parameters of the DNN model may also be considered according to the requirement.

Further, at step 204 of the method 200, the one or more hardware processors 104 are configured to iteratively perform model size reduction on the DNN model until the one or more constraints are satisfied, to obtain the compact DNN model. At each iteration, model size reduction comprises steps 204A to 204F as described herein. At step 204A, the DNN model is pruned using a pruning technique to obtain a sparse model. The pruning technique sets one or more weights in the DNN model to zero. Different pruning techniques may be implemented in different embodiments of the present disclosure, for example, Lottery Ticket Hypothesis (LTH) based pruning, iterative least magnitude pruning, Ln norm pruning, random pruning, etc. In an embodiment, different pruning techniques may be performed to obtain multiple sparse models whose size is further reduced by steps 204B to 204F. The resultant compact DNN models are compared and optimal one will be selected for deployment on resource constrained devices.

Further, at step 204B of the method 200, a configuration of the sparse model is determined which provides state information of a plurality of layers comprised in the sparse model. The configuration comprises one or more parameters of each of the plurality of layers comprising depth of an input tensor, depth of an output tensor, a kernel size, a stride length, padding, and type of the layer. For example, state information of a layer like Convolution, Residual Block i.e., layers that perform convolution operation on its input consist of *{depth of input tensor (in*_*channels), depth of output tensor (out_channels), kernel size, strides, padding, type of the layer}.* For Dense layer, it is *{size of input vector, size of output vector, type of the layer}.* For layers which perform pooling operation, configuration consist of *{depth of input tensor (in_channels), depth of output tensor (out_channels), pool_size, strides, padding, type of the layer},* but for these layers in_channels = out_channels. For layers like Batch Normalization, the configuration includes *{depth of input tensor (in_channels), depth of output tensor (out_channels), type of the layer},* where in_channels = out_channels.

Once the configuration of the sparse model is determined, at step 204C, a sparsity statistic of each of the plurality of layers is calculated by dividing number of weights with zero magnitude by total number of weights in the layer. Further, at step 204D, the configuration is updated to obtain a new configuration by i) eliminating one or more layers among the plurality of layers having the sparsity statistic greater than a predefined threshold value, and ii) determining number of filters for each of the plurality of layers except for the one or more layers that were eliminated, based on the associated sparsity statistics. In an embodiment, the predefined threshold value is estimated on the basis of difference between original model size and target model size and observed distribution of sparsity statistics. In another embodiment, the layer with maximum sparsity may be eliminated. After layer elimination, number of filters in the remaining layers are determined (usually the number of filters gets reduced since redundant filters get eliminated based on sparsity). For example, the number of filters in a Convolution Layer and its corresponding layers like Residual Block is equal to the depth of its output tensor, so in order to change the number of filters in a layer, the depth of output tensor (out_channels) parameter is edited in its state in the configuration. The updated number of filters of a given layer is given by equation 1. $out_channels ← floor \left(out_channels\times \left(1-sparsity of the given layer\right)\right)$ (1)

Once the new configuration is obtained, at step 204E of the method 200, the new configuration is post-processed to create a consistent model configuration. A model configuration is said to be consistent if a model instance can be generated from the given configuration (Model instance is an actual PyTorch or TensorFlow model). In order to create a model instance all its layer have to be well fitted i.e., the depth of input tensor to a particular layer = depth of output tensor of its previous layer. Thus, post-processing is performed by: (i) checking if depth of an input tensor to each of the plurality of layers is equal to depth of an output tensor of an immediate previous layer; and (ii) setting the depth of the input tensor to each of the plurality of layers as the depth of the output tensor of the previous layer if the depth of the input tensor and the output tensor are not equal. After layer removal, if two or more Batch Normalization Layers are present consecutively in the new configuration, one among them is removed. Any other post-processing steps may be performed in other embodiments to obtain a consistent model configuration.

Further, at step 204F, a new DNN model is generated based on the consistent model configuration using deep learning frameworks such as PyTorch or TensorFlow and the new DNN model is trained using the training dataset. The new DNN model is used in a subsequent iteration. After each iteration, the one or more constraints are checked. Size of the new DNN model is compared with the target model size (say x) and performance parameters of the new DNN model are compared with the corresponding performance penalties. If size of the new DNN model is greater than *x* and performance (accuracy / sensitivity / specificity / F1 score, etc.) is less than the performance penalty, then a next iteration of step 204 is performed. This iterative process continues until the one or more constraints are satisfied i.e., size of the new DNN model is less than *x* and performance of the new DNN model is greater than the performance penalty. The new DNN model obtained when the one or more constraints are satisfied is determined as the compact DNN model.

### USE CASE EXAMPLE

Suppose a Resnet model of size 9MB with 95% accuracy on a training dataset is obtained at step 202. Let the one or more constraints obtained at this step be: target model size = 1MB and accuracy performance penalty is 2% of performance of original model accuracy performance. Further, LTH based pruning is performed on the Resnet model at step 204A to obtain a sparse model. At step 204B, configuration of the sparse model is obtained as follow:
C = [{in_channels=3, out_channels=32, kernel_size=3, strides=1, padding=1, name=Conv2D}, {in_channels=32, out_channels=64, strides=1, name = ResidualBlock}, {in_channels=64, out_channels=64, pool_size=3, strides=2, padding=1, name=MaxPooling2D}, {in_channels=64, out_channels=128, strides=1, name=ResidualBlock}, {in_channels=128, out_channels=128, pool_size=3, strides=2, padding=1, name=MaxPooling2D}, {in_channels=128, out_channels=256, strides=1, name=ResidualBlock}, {in_channels=256, out_channels=256, pool_size=-1, strides=-1,padding=-1,name=GlobalAvgPooling2D}, {input_vec_size=256, out_vec_size=10, name=Dense}]

At step 204C, sparsity statistic of the layers are calculated as S = [0.01, 0.5, 0.0, 0.8, 0.0, 0.6, 0.0, 0.1]. The first layer receives the input data and performs first transformation on it to derive features. The last dense layer is the classification layer which produces class probabilities as output. From this utility point of view, the 1st convolution layer (Conv2D) and last Dense layer must not be eliminated in the compact DNN model, so their sparsity is assigned as 0.0. Hence sparsity statistic is given by S = [0.0, 0.5, 0.0, 0.8, 0.0, 0.6, 0.0, 0.0].

Further, at step 204D, the configuration is updated by (i) eliminating a layer with maximum sparsity (here, 4^{th} layer) to obtain a new configuration as follows: S = [0.0, 0.5, 0.0, 0.0, 0.6, 0.0, 0.0]
New_C = [{in_channels=3, out_channels=32, kernel _size=3, strides=1, padding=1, name=Conv2D}, {in_channels=32, out_channels=64, strides=1, name=ResidualBlock}, {in_channels=64, out_channels=64, pool_size=3, strides=2,padding=1,name=MaxPooling2D}, {in_channels=128, out_channels=128, pool_size=3, strides=2, padding=1, name=MaxPooling2D}, {in_channels=128, out_channels=256, strides=1, name=ResidualBlock}, {in_channels=256, out_channels = 256, pool_size = -1, strides = -1, padding = -1, name = GlobalAvgPooling2D}, {input_vec_size = 256, out_vec_size=10, name=Dense}]

(ii) Number of filters of remaining layers are determined. For example, the 2^{nd} layer has sparsity 0.5 and current out_channels = 64. Therefore, updated *out_channels = floor*(64 × (1 - 0.5)) = 32. Hence the new configuration becomes:
New_C = [{in_channels=3, out_channels=32, kernel _size=3, strides=1, padding=1, name=Conv2D}, {in_channels=32, out_channels=**32**, strides=1, name=ResidualBlock}, {in_channels=64, out_channels=64, pool_size=3, strides=2, padding=1, name=MaxPooling2D}, {in_channels=128, out_channels=128, pool_size=3, strides=2, padding=1, name=MaxPooling2D}, {in_channels=128, out_channels=**153**, strides=1, name=ResidualBlock}, {in_channels=256, out_channels = 256, pool_size = -1, strides = -1, padding = -1, name = GlobalAvgPooling2D}, {input_vec_size = 256, out_vec_size=10, name = Dense}]
From this new configuration, it can be observed that the number of filters are reduced (values in bold) in two of the layers due to elimination of unwanted filters.

Further, at step 204E, the new configuration is post-processed to create a consistent model configuration. The second layer is consistent. For the 3^{rd} layer, depth of input tensor (in_channels) is 64 but output of the immediate previous layer (i.e., the 2^{nd} layer) is 32. In order to make the 3^{rd} layer consistent, in_channels is set to 32. The configuration of remaining layers are also updated in same way. Thus, the consistent model configuration obtained after post-processing is as follows:
Consistent_C = [{in_channels=3, out_channels=32, kernel_size=3, strides=1, padding=1, name=Conv2D}, {in_channels=***32***, out_channels=32, strides=1, name=ResidualBlock}, {in_channels=***32***, out_channels=***32***, pool_size=3, strides=2, padding=1, name=MaxPooling2D}, {in_channels=***32***, out_channels=***32***, pool_size=3, strides=2, padding=1, name=MaxPooling2D}, {in_channels=***32***, out_channels=153, strides=1, name=ResidualBlock}, {in_channels=***153***, out_channels=***153***, pool_size=-1, strides=-1, padding=-1, name=GlobalAvgPooling2D}, {input_vec_size=***153***, out_vec_size=10, name=Dense}]
The updated filters are highlighted in bold and Italics. It can be observed that the configuration is consistent since depth of an input tensor to each of the plurality of layers is equal to depth of an output tensor of an immediate previous layer. Further at step 204F, a new DNN model is generated based on the consistent model configuration and trained using the training dataset.

Suppose size of the new DNN model is 2MB with 94% accuracy on the given dataset., then step 204 will be repeated since 2MB is more than the target model size (1MB) and accuracy performance (95-94/95)*100 < 2%. Suppose the size of the new DNN model is 1MB with 93.5% accuracy, then the iterative process in step 204 will be stopped and the new DNN model will be given as output.

### EXPERIMENTS AND RESULTS

**Datasets and models:** The method 200 was studied on two distinct types of data: (i) one-dimensional (1D) timeseries and (ii) image. (i) 1D timeseries data was taken from UCR time-series classification archive [Hoang Anh Dau et.al., "The ucr time series archive," IEEE/CAA Journal of Automatica Sinica, vol. 6, no. 6, pp. 1293-1305, 2019*.].* UCR time-series classification archive consists of 128 datasets spanning distinct types of timeseries and associated classification problems. Experiments were performed with 27 of these datasets ensuring that they include the different type of problems and range of timeseries length. (ii) images were taken from CIFAR-10 *[*Alex Krizhevsky et al., "Learning multiple layers of features from tiny images," 2009*]* dataset which is a standard image classification dataset comprising 60,000 color images in 10 classes. The base models D for timeseries classification tasks are based on fully convolutional networks and ResNet as described in *[*Zhiguang Wang et.al, "Time series classification from scratch with deep neural networks: A strong baseline," in 2017 International joint conference on neural networks (IJCNN) IEEE, 2017]. For image classification, a generic multi-layer fully convolutional network and ResNet with wide filters are taken as input DNN model to perform method 200 *[*Kaiming He et.al, "Deep residual learning for image recognition, " in Proceedings of the IEEE conference on computer vision and pattern recognition, 2016, pp. 770-778*.,* Sergey Zagoruyko and Nikos Komodakis, "Wide residual networks, " arXiv preprint arXiv:1605.07146, 2016].

**Experimental Setup:** For each dataset, its associated base model *D* is obtained and method 200 is applied. Experiments were performed with two kinds of constraints: i) Yield model with smallest possible size which also meets the constraint on allowable change in model performance (alternatively referred as performance penalty) *ε*. ii) Given a target upper limit on the model size *D_{sub},* produce model with least depreciation in model performance.

**Results:** Results on image classification models for different constraints are presented table 1.

**Table 1**

| **Base DNN Model** | | | **Constraint** | **Compact DNN model** | |
|---|---|---|---|---|---|
| **Type** | **Size (MB)** | **Accuracy** | | **Size (MB)** | **Accuracy** |
| ConvNet2D | 16.24 | 0.9412 | <1% accuracy loss | 5.85 | 0.9313 |
| | | | <2% accuracy loss | 2.09 | 0.9115 |
| | | | <1MB size | 0.76 | 0.8919 |
| | | | <2MB size | 0.76 | 0.8919 |
| ResNet-50 | 12.7 | 0.9385 | <1% accuracy loss | 1.98 | 0.9323 |
| | | | <2% accuracy loss | 1.92 | 0.9243 |
| | | | <1MB size | NA | NA |
| | | | <2MB size | 1.98 | 0.9319 |

FIGS. 3 to 9 provide a concise visual representation of the results on time-series models for different constraints. x axis labels in all the figures are the different datasets from UCR timeseries repository on which experiments were performed. Each round marker directly above a dataset label corresponds to that dataset.

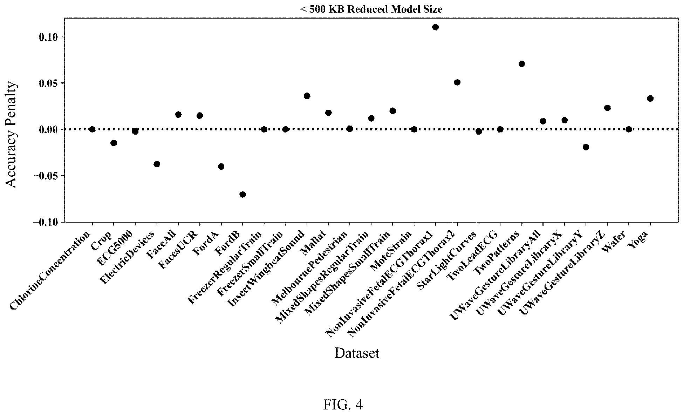

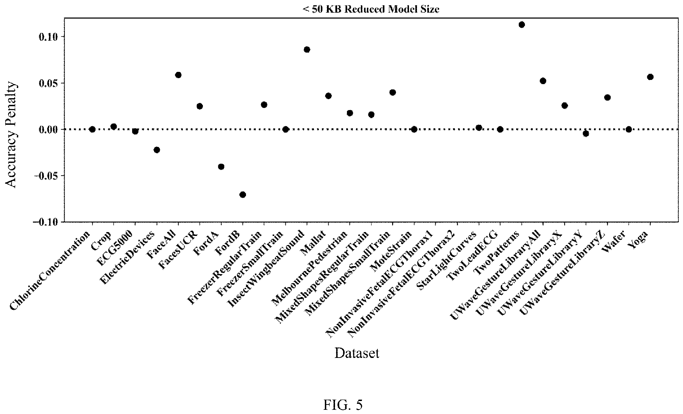

FIGS. 3 to 5 illustrate accuracy performance penalty on different models whose size is reduced using method 200 using different target model size constraint. In these figures, y-axis values represent the observed accuracy penalty for the compact model generated using method 200, which meets the size condition mentioned on top of the graph. FIG. 3 is a graph illustrating accuracy penalty incurred for model size reduction of a ResNet model trained on UCR datasets with target model size constraint < 2MB, according to some embodiments of the present disclosure. FIG. 4 is a graph illustrating accuracy penalty incurred for model size reduction of a ConvNet model trained on UCR datasets with target model size constraint < 500KB, according to some embodiments of the present disclosure. FIG. 5 is a graph illustrating accuracy penalty incurred for model size reduction of a ConvNet model trained on UCR datasets with target model size constraint < 50KB, according to some embodiments of the present disclosure.

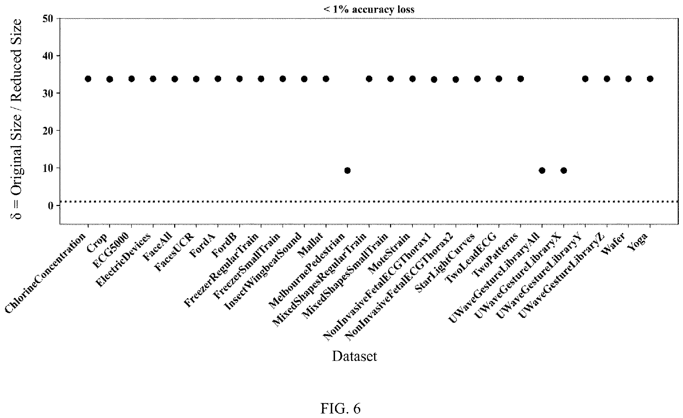

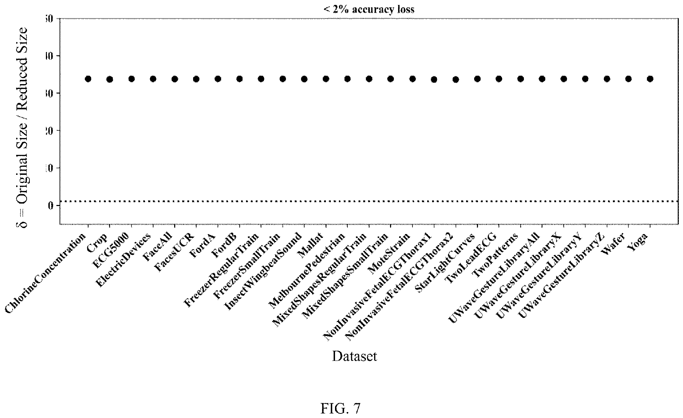

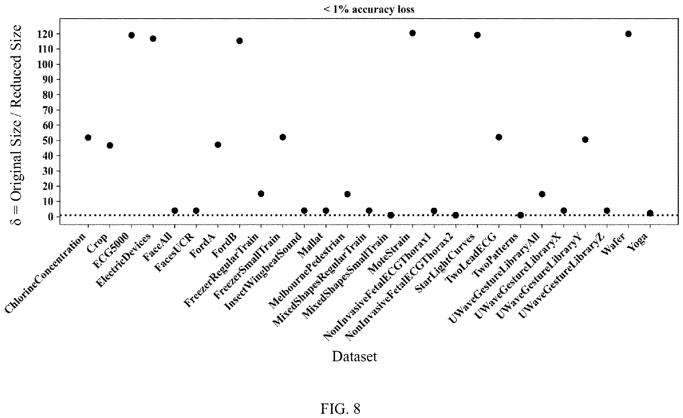

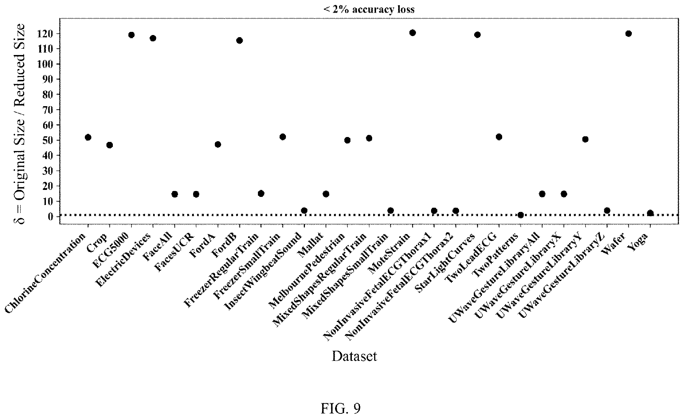

FIGS. 6 to 9 plot size reduction factor of different models trained on UCR datasets. The size reduction factor δ is ratio of size of original DNN model obtained as input to the size of compact DNN model generated by method 200. So, y-axis in the figures represent the size reduction factor and a round marker directly above x axis label gives the reduction factor for the corresponding dataset achieved by method 200. The constraint considered is mentioned on top of the graph. FIG. 6 is a graph illustrating size reduction factor δ with loss in accuracy < 1% by performing model size reduction of a ResNet model trained on UCR datasets, according to some embodiments of the present disclosure. FIG. 7 is a graph illustrating size reduction factor δ with loss in accuracy < 2% by performing model size reduction of a ResNet model trained on UCR datasets, according to some embodiments of the present disclosure. FIG. 8 is a graph illustrating size reduction factor δ with loss in accuracy < 1% by performing model size reduction of a ConvNet model trained on UCR datasets, according to some embodiments of the present disclosure. FIG. 9 is a graph illustrating size reduction factor δ with loss in accuracy < 2% by performing model size reduction of a ConvNet model trained on UCR datasets, according to some embodiments of the present disclosure. It can be observed from the graphs that the method 200 is able to highly reduce the DNN model in most of the cases keeping the given condition satisfied. However, depending on the dataset different levels of reduction may be possible.

**Deployment on microcontrollers:** Experiments were performed by deploying original DNN model and compact DNN model obtained by method 200 on resource constrained device (particularly, STM 32 microcontroller board). Two DNN models were trained on two datasets for following use cases: i) Diagnosing automotive subsystem - The first DNN model was trained for classification of symptom based on engine noise recorded as timeseries. ii) Electrical power demand - The second DNN model was trained for seasonal month classification based on power demand timeseries. The trained model were converted to a TFLite file using TensorFlow Lite framework which converts a TensorFlow model into a compressed flat buffer for deploying on mobile and edge device. STM32Cube.AI framework was used to deploy the TFLite file on the STM32 microcontroller. The first DNN model was deployed on STM32-F746G microcontroller which has 320KB RAM and 1MB flash by using the STM32Cube.AI framework. The results are recorded in table 2. Original DNN model could not be loaded on the microcontroller board since Cube AI output is more than board memory. On applying method 200 on the DNN model, the model size reduced significantly and accuracy also increased as seen in table 2.

**Table 2**

| | **Original DNN model** | **Compact DNN model obtained by method 200** | |
|---|---|---|---|
| | **STM32-F746G (TFLite fed into Cube.AI)** | **STM32-F746G (TFLite fed into Cube.AI)** | **Laptop (TFLite)** |
| **Size** | 2.02MB | 44.8KB | 44.8KB |
| **Data shape** | (500,1) | (500,1,1) | (500,1) |
| **Accuracy** | 91.96% | 95.9% | 95.9% |
| **Latency** | NA | 67.848ms | |

The second DNN model was deployed on (i) STM32-F746G microcontroller which has 320KB RAM and 1MB flash and (ii) STM32-F476G microcontroller which has 128KB RAM and 1MB flash by using the STM32Cube.AI framework. The results are recorded in table 3. Original DNN model could not be loaded on the microcontroller board since Cube AI output is more than board memory. On applying method 200 on the DNN model, the model size reduced significantly and accuracy also increased as seen in table 3.

**Table 3**

| | **Original DNN model** | **Compact DNN model obtained by method 200** | | |
|---|---|---|---|---|
| | **STM32-F746G (TFLite fed into Cube.AI)** | **STM32-F746G (TFLite fed into Cube.AI)** | **STM32-F476G (TFLite fed into Cube.AI)** | **Laptop (TFLite)** |
| **Size** | 2.02MB | 40.8KB | 40.8KB | 40.8KB |
| **Data shape** | (24,1) | (24,1,1) | (24,1,1) | (24,1) |
| **Accuracy** | 97% | 100% | 100% | 100% |
| **Latency** | NA | 3.199ms | 15.969ms | |

The written description describes the subject matter herein to enable any person skilled in the art to make and use the embodiments. The scope of the subject matter embodiments is defined by the claims.

The embodiments of present disclosure herein addresses unresolved problem of reducing size of a DNN model for deploying in resource constrained devices such as edge devices, mobile devices, microcontrollers etc. Conventional pruning methods result in zero weight parameters but does not effectively reduce the size of the models. In order to overcome the above-mentioned drawbacks of conventional pruning techniques, embodiments of present disclosure provide a method and system for deep neural network (DNN) model size reduction by systematic layer and filter elimination. It imbibes the capability of effective discovery of sparsified layers and systematically generates smaller size models close to the performance of base model. Further, the disclosed method gains regularization effect due to the removal of unnecessary parameters. The smaller size model reduces computational burden, energy consumption, and latency along with satisfying smaller memory requirements and thus, it leads to the possibility of deploying at different edge devices that provides the opportunity to develop niche and important applications in different domains including automobiles, robotics, healthcare etc.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
obtaining (202), via one or more hardware processors (104), a Deep Neural Network (DNN) model, a training dataset, and one or more constraints, wherein the one or more constraints comprise a target model size and one or more performance penalties, wherein the target model size aids the DNN model to fit in an edge device or microcontroller's memory for deployment; and
iteratively performing (204), via the one or more hardware processors (104), model size reduction on the DNN model until the one or more constraints are satisfied, to obtain a compact DNN model, wherein at each iteration, the model size reduction comprises:
pruning (204A) the DNN model using a pruning technique to obtain a sparse model, wherein the pruning technique sets one or more weights in the DNN model to zero;
determining (204B) a configuration of the sparse model, wherein the configuration provides state information of a plurality of layers comprised in the sparse model;
calculating (204C) a sparsity statistic of each of the plurality of layers;
updating (204D) the configuration to obtain a new configuration by i) eliminating one or more layers among the plurality of layers having the sparsity statistic greater than a predefined threshold value, and ii) determining a number of filters for each of the plurality of layers except for the one or more layers that were eliminated, based on the associated sparsity statistics;
post-processing (204E) the new configuration to create a consistent model configuration; and
generating (204F) a new DNN model based on the consistent model configuration and training the new DNN model using the training dataset, wherein the new DNN model is used in a subsequent iteration, and wherein the new DNN model obtained when the one or more constraints are satisfied is determined as the compact DNN model.

2. The method as claimed in claim 1, wherein the one or more performance penalties set a bound on performance parameters of the compact DNN model in terms of accuracy, sensitivity, specificity, and F1-score.

3. The method as claimed in claim 1, wherein the configuration comprises parameters of each of the plurality of layers, wherein the parameters comprise a depth of an input tensor, a depth of an output tensor, a kernel size, a stride length, padding, and type of the layer.

4. The method as claimed in claim 1, wherein the sparsity statistic of each of the plurality of layers is calculated by dividing a number of weights with zero magnitude by a total number of weights in the layer.

5. The method as claimed in claim 1, wherein post-processing the new configuration comprises:
checking if a depth of an input tensor to each of the plurality of layers is equal to a depth of an output tensor of an immediate previous layer; and
setting the depth of the input tensor to each of the plurality of layers as the depth of the output tensor of the previous layer if the depth of the input tensor and the depth of the output tensor are not equal.

6. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
obtain a Deep Neural Network (DNN) model, a training dataset, and one or more constraints, wherein the one or more constraints comprise a target model size and one or more performance penalties, wherein the target model size aids the DNN model to fit in an edge device or microcontroller's memory for deployment; and
iteratively perform model size reduction on the DNN model until the one or more constraints are satisfied, to obtain a compact DNN model, wherein at each iteration, the model size reduction comprises:
pruning the DNN model using a pruning technique to obtain a sparse model, wherein the pruning technique sets one or more weights in the DNN model to zero;
determine a configuration of the sparse model, wherein the configuration provides state information of a plurality of layers comprised in the sparse model;
calculate a sparsity statistic of each of the plurality of layers;
update the configuration to obtain a new configuration by i) eliminating one or more layers among the plurality of layers having the sparsity statistic greater than a predefined threshold value, and ii) determining a number of filters for each of the plurality of layers except for the one or more layers that were eliminated, based on the associated sparsity statistics;
post-process the new configuration to create a consistent model configuration; and
generate a new DNN model based on the consistent model configuration and training the new DNN model using the training dataset, wherein the new DNN model is used in a subsequent iteration, and wherein the new DNN model obtained when the one or more constraints are satisfied is determined as the compact DNN model.

7. The system (100) as claimed in claim 6, wherein the one or more performance penalties set a bound on performance parameters of the compact DNN model in terms of accuracy, sensitivity, specificity, and F1-score.

8. The system (100) as claimed in claim 6, wherein the configuration comprises parameters of each of the plurality of layers, wherein the parameters comprise a depth of an input tensor, a depth of an output tensor, a kernel size, a stride length, padding, and type of the layer.

9. The system (100) as claimed in claim 6, wherein a sparsity statistic of each of the plurality of layers is calculated by dividing a number of weights with zero magnitude by a total number of weights in the layer.

10. The system (100) as claimed in claim 6, wherein post-processing the new configuration comprises:
checking if a depth of an input tensor to each of the plurality of layers is equal to a depth of an output tensor of an immediate previous layer; and
setting the depth of the input tensor to each of the plurality of layers as the depth of the output tensor of the previous layer if the depth of the input tensor and the depth of the output tensor are not equal.

11. One or more non-transitory machine-readable information storage mediums comprising one or more instructions which when executed by one or more hardware processors (104) cause:
obtaining a Deep Neural Network (DNN) model, a training dataset, and one or more constraints, wherein the one or more constraints comprise a target model size and one or more performance penalties, wherein the target model size aids the DNN model to fit in an edge device or microcontroller's memory for deployment; and
iteratively performing model size reduction on the DNN model until the one or more constraints are satisfied, to obtain a compact DNN model, wherein at each iteration, the model size reduction comprises:
pruning the DNN model using a pruning technique to obtain a sparse model, wherein the pruning technique sets one or more weights in the DNN model to zero;
determining a configuration of the sparse model, wherein the configuration provides state information of a plurality of layers comprised in the sparse model;
calculating a sparsity statistic of each of the plurality of layers;
updating the configuration to obtain a new configuration by i) eliminating one or more layers among the plurality of layers having the sparsity statistic greater than a predefined threshold value, and ii) determining a number of filters for each of the plurality of layers except for the one or more layers that were eliminated, based on the associated sparsity statistics;
post-processing the new configuration to create a consistent model configuration; and
generating a new DNN model based on the consistent model configuration and training the new DNN model using the training dataset, wherein the new DNN model is used in a subsequent iteration, and wherein the new DNN model obtained when the one or more constraints are satisfied is determined as the compact DNN model.

12. The one or more non-transitory machine-readable information storage mediums as claimed in claim 11, wherein the one or more performance penalties set a bound on performance parameters of the compact DNN model in terms of accuracy, sensitivity, specificity, and F1-score.

13. The one or more non-transitory machine-readable information storage mediums as claimed in claim 11, wherein the configuration comprises parameters of each of the plurality of layers, wherein the parameters comprise a depth of an input tensor, a depth of an output tensor, a kernel size, a stride length, padding, and type of the layer.

14. The one or more non-transitory machine-readable information storage mediums as claimed in claim 11, wherein a sparsity statistic of each of the plurality of layers is calculated by dividing a number of weights with zero magnitude by a total number of weights in the layer.

15. The one or more non-transitory machine-readable information storage mediums as claimed in claim 11, wherein post-processing the new configuration comprises:
checking if a depth of an input tensor to each of the plurality of layers is equal to a depth of an output tensor of an immediate previous layer; and
setting the depth of the input tensor to each of the plurality of layers as the depth of the output tensor of the previous layer if the depth of the input tensor and the depth of the output tensor are not equal.

## Patentansprüche

1. Prozessorimplementiertes Verfahren (200), umfassend:
Erhalten (202), über einen oder mehrere Hardwareprozessoren (104), eines Deep Neural Network (DNN)-Modells, eines Trainingsdatensatzes und einer oder mehrerer Randbedingungen, wobei die eine oder die mehreren Randbedingungen eine Zielmodellgröße und eine oder mehrere Leistungsstrafen umfassen, wobei die Zielmodellgröße das DNN-Modell dabei unterstützt, in einen Randvorrichtungs- oder Mikrocontroller-Speicher zum Einsatz zu passen; und
iteratives Durchführen (204), über den einen oder die mehreren Hardwareprozessoren (104), einer Modellgrößenreduktion an dem DNN-Modell, bis die eine oder die mehreren Randbedingungen erfüllt sind, um ein kompaktes DNN-Modell zu erhalten, wobei bei jeder Iteration die Modellgrößenreduktion Folgendes umfasst:
Beschneiden (204A) des DNN-Modells unter Verwendung einer Beschneidungstechnik, um ein spärliches Modell zu erhalten, wobei die Beschneidungstechnik ein oder mehrere Gewichte in dem DNN-Modell auf null setzt;
Bestimmen (204B) einer Konfiguration des spärlichen Modells, wobei die Konfiguration Zustandsinformationen einer Mehrzahl von Schichten bereitstellt, die in dem spärlichen Modell enthalten sind;
Berechnen (204C) einer Spärlichkeitsstatistik jeder der Mehrzahl von Schichten;
Aktualisieren (204D) der Konfiguration, um eine neue Konfiguration zu erhalten, durch i) Eliminieren einer oder mehrerer Schichten unter der Mehrzahl von Schichten, die die Spärlichkeitsstatistik aufweisen, die größer als ein vordefinierter Schwellenwert ist, und ii) Bestimmen einer Anzahl von Filtern für jede der Mehrzahl von Schichten mit Ausnahme der einen oder der mehreren Schichten, die eliminiert wurden, basierend auf den assoziierten Spärlichkeitsstatistiken;
Nachverarbeiten (204E) der neuen Konfiguration, um eine konsistente Modellkonfiguration zu erzeugen; und
Erzeugen (204F) eines neuen DNN-Modells basierend auf der konsistenten Modellkonfiguration und Trainieren des neuen DNN-Modells unter Verwendung des Trainingsdatensatzes, wobei das neue DNN-Modell in einer nachfolgenden Iteration verwendet wird, und wobei das neue DNN-Modell, das erhalten wird, wenn die eine oder die mehreren Randbedingungen erfüllt sind, als das kompakte DNN-Modell bestimmt wird.

2. Verfahren nach Anspruch 1, wobei die eine oder die mehreren Leistungsstrafen eine Grenze für Leistungsparameter des kompakten DNN-Modells in Bezug auf Genauigkeit, Empfindlichkeit, Spezifität und F1-Score setzen.

3. Verfahren nach Anspruch 1, wobei die Konfiguration Parameter jeder der Mehrzahl von Schichten umfasst, wobei die Parameter eine Tiefe eines Eingabe-Tensors, eine Tiefe eines Ausgabe-Tensors, eine Kerngröße, eine Schrittlänge, Füllung und Typ der Schicht umfassen.

4. Verfahren nach Anspruch 1, wobei die Spärlichkeitsstatistik jeder der Mehrzahl von Schichten durch Dividieren einer Anzahl von Gewichten mit Nullbetrag durch eine Gesamtanzahl von Gewichten in der Schicht berechnet wird.

5. Verfahren nach Anspruch 1, wobei das Nachverarbeiten der neuen Konfiguration umfasst:
Prüfen, ob eine Tiefe eines Eingabe-Tensors für jede der Mehrzahl von Schichten gleich einer Tiefe eines Ausgabe-Tensors einer unmittelbar vorhergehenden Schicht ist; und
Setzen der Tiefe des Eingabe-Tensors für jede der Mehrzahl von Schichten als die Tiefe des Ausgabe-Tensors der vorhergehenden Schicht, wenn die Tiefe des Eingabe-Tensors und die Tiefe des Ausgabe-Tensors nicht gleich sind.

6. System (100), umfassend:
einen Speicher (102), der Anweisungen speichert;
eine oder mehrere Eingabe/Ausgabe(E/A)-Schnittstellen (106); und
einen oder mehrere Hardware-Prozessoren (104), die mit dem Speicher (102) über die eine oder die mehreren Kommunikationsschnittstellen (106) gekoppelt sind, wobei der eine oder die mehreren Hardware-Prozessoren (104) durch die Anweisungen konfiguriert sind zum:
Erhalten eines Deep Neural Network (DNN)-Modells, eines Trainingsdatensatzes und einer oder mehrerer Randbedingungen, wobei die eine oder die mehreren Randbedingungen eine Zielmodellgröße und eine oder mehrere Leistungsstrafen umfassen, wobei die Zielmodellgröße das DNN-Modell dabei unterstützt, in einen Randvorrichtungs- oder Mikrocontroller-Speicher zum Einsatz zu passen; und
iteratives Durchführen einer Modellgrößenreduktion an dem DNN-Modell, bis die eine oder die mehreren Randbedingungen erfüllt sind, um ein kompaktes DNN-Modell zu erhalten, wobei bei jeder Iteration die Modellgrößenreduktion Folgendes umfasst:
Beschneiden des DNN-Modells unter Verwendung einer Beschneidungstechnik, um ein spärliches Modell zu erhalten, wobei die Beschneidungstechnik ein oder mehrere Gewichte in dem DNN-Modell auf null setzt;
Bestimmen einer Konfiguration des spärlichen Modells, wobei die Konfiguration Zustandsinformationen einer Mehrzahl von Schichten bereitstellt, die in dem spärlichen Modell enthalten sind;
Berechnen einer Spärlichkeitsstatistik jeder der Mehrzahl von Schichten;
Aktualisieren der Konfiguration, um eine neue Konfiguration zu erhalten, durch i) Eliminieren einer oder mehrerer Schichten unter der Mehrzahl von Schichten, die die Spärlichkeitsstatistik aufweisen, die größer als ein vordefinierter Schwellenwert ist, und ii) Bestimmen einer Anzahl von Filtern für jede der Mehrzahl von Schichten mit Ausnahme der einen oder der mehreren Schichten, die eliminiert wurden, basierend auf den assoziierten Spärlichkeitsstatistiken;
Nachverarbeiten der neuen Konfiguration, um eine konsistente Modellkonfiguration zu erzeugen; und
Erzeugen eines neuen DNN-Modells basierend auf der konsistenten Modellkonfiguration und Trainieren des neuen DNN-Modells unter Verwendung des Trainingsdatensatzes, wobei das neue DNN-Modell in einer nachfolgenden Iteration verwendet wird, und wobei das neue DNN-Modell, das erhalten wird, wenn die eine oder die mehreren Randbedingungen erfüllt sind, als das kompakte DNN-Modell bestimmt wird.

7. System (100) nach Anspruch 6, wobei die eine oder die mehreren Leistungsstrafen eine Grenze für Leistungsparameter des kompakten DNN-Modells in Bezug auf Genauigkeit, Empfindlichkeit, Spezifität und F1-Score setzen.

8. System (100) nach Anspruch 6, wobei die Konfiguration Parameter jeder der Mehrzahl von Schichten umfasst, wobei die Parameter eine Tiefe eines Eingabe-Tensors, eine Tiefe eines Ausgabe-Tensors, eine Kerngröße, eine Schrittlänge, Füllung und Typ der Schicht umfassen.

9. System (100) nach Anspruch 6, wobei eine Spärlichkeitsstatistik jeder der Mehrzahl von Schichten durch Dividieren einer Anzahl von Gewichten mit Nullbetrag durch eine Gesamtanzahl von Gewichten in der Schicht berechnet wird.

10. System (100) nach Anspruch 6, wobei das Nachverarbeiten der neuen Konfiguration umfasst:
Prüfen, ob eine Tiefe eines Eingabe-Tensors für jede der Mehrzahl von Schichten gleich einer Tiefe eines Ausgabe-Tensors einer unmittelbar vorhergehenden Schicht ist; und
Setzen der Tiefe des Eingabe-Tensors für jede der Mehrzahl von Schichten als die Tiefe des Ausgabe-Tensors der vorhergehenden Schicht, wenn die Tiefe des Eingabe-Tensors und die Tiefe des Ausgabe-Tensors nicht gleich sind.

11. Ein oder mehrere nichtflüchtige maschinenlesbare Informationsspeichermedien, umfassend eine oder mehrere Anweisungen, die bei Ausführung durch einen oder mehrere Hardware-Prozessoren (104) Folgendes bewirken:
Erhalten eines Deep Neural Network (DNN)-Modells, eines Trainingsdatensatzes und einer oder mehrerer Randbedingungen, wobei die eine oder die mehreren Randbedingungen eine Zielmodellgröße und eine oder mehrere Leistungsstrafen umfassen, wobei die Zielmodellgröße das DNN-Modell dabei unterstützt, in einen Randvorrichtungs- oder Mikrocontroller-Speicher zum Einsatz zu passen; und
iteratives Durchführen einer Modellgrößenreduktion an dem DNN-Modell, bis die eine oder die mehreren Randbedingungen erfüllt sind, um ein kompaktes DNN-Modell zu erhalten, wobei bei jeder Iteration die Modellgrößenreduktion Folgendes umfasst:
Beschneiden des DNN-Modells unter Verwendung einer Beschneidungstechnik, um ein spärliches Modell zu erhalten, wobei die Beschneidungstechnik ein oder mehrere Gewichte in dem DNN-Modell auf null setzt;
Bestimmen einer Konfiguration des spärlichen Modells, wobei die Konfiguration Zustandsinformationen einer Mehrzahl von Schichten bereitstellt, die in dem spärlichen Modell enthalten sind;
Berechnen einer Spärlichkeitsstatistik jeder der Mehrzahl von Schichten;
Aktualisieren der Konfiguration, um eine neue Konfiguration zu erhalten, durch i) Eliminieren einer oder mehrerer Schichten unter der Mehrzahl von Schichten, die die Spärlichkeitsstatistik aufweisen, die größer als ein vordefinierter Schwellenwert ist, und ii) Bestimmen einer Anzahl von Filtern für jede der Mehrzahl von Schichten mit Ausnahme der einen oder der mehreren Schichten, die eliminiert wurden, basierend auf den assoziierten Spärlichkeitsstatistiken;
Nachverarbeiten der neuen Konfiguration, um eine konsistente Modellkonfiguration zu erzeugen; und
Erzeugen eines neuen DNN-Modells basierend auf der konsistenten Modellkonfiguration und Trainieren des neuen DNN-Modells unter Verwendung des Trainingsdatensatzes, wobei das neue DNN-Modell in einer nachfolgenden Iteration verwendet wird, und wobei das neue DNN-Modell, das erhalten wird, wenn die eine oder die mehreren Randbedingungen erfüllt sind, als das kompakte DNN-Modell bestimmt wird.

12. Ein oder mehrere nichtflüchtige maschinenlesbare Informationsspeichermedien nach Anspruch 11, wobei die eine oder die mehreren Leistungsstrafen eine Grenze für Leistungsparameter des kompakten DNN-Modells in Bezug auf Genauigkeit, Empfindlichkeit, Spezifität und F1-Score setzen.

13. Ein oder mehrere nichtflüchtige maschinenlesbare Informationsspeichermedien nach Anspruch 11, wobei die Konfiguration Parameter jeder der Mehrzahl von Schichten umfasst, wobei die Parameter eine Tiefe eines Eingabe-Tensors, eine Tiefe eines Ausgabe-Tensors, eine Kerngröße, eine Schrittlänge, Füllung und Typ der Schicht umfassen.

14. Ein oder mehrere nichtflüchtige maschinenlesbare Informationsspeichermedien nach Anspruch 11, wobei eine Spärlichkeitsstatistik jeder der Mehrzahl von Schichten durch Dividieren einer Anzahl von Gewichten mit Nullbetrag durch eine Gesamtanzahl von Gewichten in der Schicht berechnet wird.

15. Ein oder mehrere nichtflüchtige maschinenlesbare Informationsspeichermedien nach Anspruch 11, wobei das Nachverarbeiten der neuen Konfiguration umfasst:
Prüfen, ob eine Tiefe eines Eingabe-Tensors für jede der Mehrzahl von Schichten gleich einer Tiefe eines Ausgabe-Tensors einer unmittelbar vorhergehenden Schicht ist; und
Setzen der Tiefe des Eingabe-Tensors für jede der Mehrzahl von Schichten als die Tiefe des Ausgabe-Tensors der vorhergehenden Schicht, wenn die Tiefe des Eingabe-Tensors und die Tiefe des Ausgabe-Tensors nicht gleich sind.

## Revendications

1. Procédé mis en œuvre par processeur (200), comprenant :
l'obtention (202), par l'intermédiaire d'un ou plusieurs processeurs matériels (104), d'un modèle de réseau neuronal profond (DNN), d'un ensemble de données d'apprentissage, et d'une ou plusieurs contraintes, dans lequel les une ou plusieurs contraintes comprennent une taille de modèle cible et une ou plusieurs pénalités de performance, dans lequel la taille de modèle cible aide le modèle DNN à s'adapter dans une mémoire de dispositif périphérique ou de microcontrôleur pour déploiement ; et
la réalisation itérative (204), par l'intermédiaire des un ou plusieurs processeurs matériels (104), d'une réduction de taille de modèle sur le modèle DNN jusqu'à ce que les une ou plusieurs contraintes soient satisfaites, pour obtenir un modèle DNN compact, dans lequel à chaque itération, la réduction de taille de modèle comprend :
l'élagage (204A) du modèle DNN en utilisant une technique d'élagage pour obtenir un modèle parcimonieux, dans lequel la technique d'élagage règle un ou plusieurs poids dans le modèle DNN à zéro ;
la détermination (204B) d'une configuration du modèle parcimonieux, dans lequel la configuration fournit des informations d'état d'une pluralité de couches comprises dans le modèle parcimonieux ;
le calcul (204C) d'un taux de sparsité de chacune de la pluralité de couches ;
la mise à jour (204D) de la configuration pour obtenir une nouvelle configuration i) en éliminant une ou plusieurs couches parmi la pluralité de couches ayant le taux de sparsité supérieur à une valeur de seuil prédéfinie, et ii) en déterminant un nombre de filtres pour chacune de la pluralité de couches à l'exception des une ou plusieurs couches qui ont été éliminées, sur la base des taux de sparsité associés ;
le post-traitement (204E) de la nouvelle configuration pour créer une configuration de modèle cohérente ; et
la génération (204F) d'un nouveau modèle DNN sur la base de la configuration de modèle cohérente et l'apprentissage du nouveau modèle DNN en utilisant l'ensemble de données d'apprentissage, dans lequel le nouveau modèle DNN est utilisé dans une itération ultérieure, et dans lequel le nouveau modèle DNN obtenu lorsque les une ou plusieurs contraintes sont satisfaites est déterminé comme étant le modèle DNN compact.

2. Procédé selon la revendication 1, dans lequel les une ou plusieurs pénalités de performance définissent une limite sur des paramètres de performance du modèle DNN compact en termes d'exactitude, de sensibilité, de spécificité, et de score F1 .

3. Procédé selon la revendication 1, dans lequel la configuration comprend des paramètres de chacune de la pluralité de couches, dans lequel les paramètres comprennent une profondeur d'un tenseur d'entrée, une profondeur d'un tenseur de sortie, une taille de noyau, une longueur de pas, un remplissage, et un type de la couche.

4. Procédé selon la revendication 1, dans lequel le taux de sparsité de chacune de la pluralité de couches est calculé en divisant un nombre de poids de valeur nulle par un nombre total de poids dans la couche.

5. Procédé selon la revendication 1, dans lequel le post-traitement de la nouvelle configuration comprend :
le fait de vérifier si une profondeur d'un tenseur d'entrée pour chacune de la pluralité de couches est égale à une profondeur d'un tenseur de sortie d'une couche immédiatement précédente ; et
le réglage de la profondeur du tenseur d'entrée pour chacune de la pluralité de couches en tant que profondeur du tenseur de sortie de la couche précédente si la profondeur du tenseur d'entrée et la profondeur du tenseur de sortie ne sont pas égales.

6. Système (100), comprenant :
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
obtenir un modèle de réseau neuronal profond (DNN), un ensemble de données d'apprentissage, et une ou plusieurs contraintes, dans lequel les une ou plusieurs contraintes comprennent une taille de modèle cible et une ou plusieurs pénalités de performance, dans lequel la taille de modèle cible aide le modèle DNN à s'adapter dans une mémoire de dispositif périphérique ou de microcontrôleur pour déploiement ; et
réaliser itérativement une réduction de taille de modèle sur le modèle DNN jusqu'à ce que les une ou plusieurs contraintes soient satisfaites, pour obtenir un modèle DNN compact, dans lequel à chaque itération, la réduction de taille de modèle comprend :
l'élagage du modèle DNN en utilisant une technique d'élagage pour obtenir un modèle parcimonieux, dans lequel la technique d'élagage règle un ou plusieurs poids dans le modèle DNN à zéro ;
la détermination d'une configuration du modèle parcimonieux, dans lequel la configuration fournit des informations d'état d'une pluralité de couches comprises dans le modèle parcimonieux ;
le calcul d'un taux de sparsité de chacune de la pluralité de couches ;
la mise à jour de la configuration pour obtenir une nouvelle configuration i) en éliminant une ou plusieurs couches parmi la pluralité de couches ayant le taux de sparsité supérieur à une valeur de seuil prédéfinie, et ii) en déterminant un nombre de filtres pour chacune de la pluralité de couches à l'exception des une ou plusieurs couches qui ont été éliminées, sur la base des taux de sparsité associés ;
le post-traitement de la nouvelle configuration pour créer une configuration de modèle cohérente ; et
la génération d'un nouveau modèle DNN sur la base de la configuration de modèle cohérente et l'apprentissage du nouveau modèle DNN en utilisant l'ensemble de données d'apprentissage, dans lequel le nouveau modèle DNN est utilisé dans une itération ultérieure, et dans lequel le nouveau modèle DNN obtenu lorsque les une ou plusieurs contraintes sont satisfaites est déterminé comme étant le modèle DNN compact.

7. Système (100) selon la revendication 6, dans lequel les une ou plusieurs pénalités de performance définissent une limite sur des paramètres de performance du modèle DNN compact en termes d'exactitude, de sensibilité, de spécificité, et de score F1 .

8. Système (100) selon la revendication 6, dans lequel la configuration comprend des paramètres de chacune de la pluralité de couches, dans lequel les paramètres comprennent une profondeur d'un tenseur d'entrée, une profondeur d'un tenseur de sortie, une taille de noyau, une longueur de pas, un remplissage, et un type de la couche.

9. Système (100) selon la revendication 6, dans lequel un taux de sparsité de chacune de la pluralité de couches est calculé en divisant un nombre de poids de valeur nulle par un nombre total de poids dans la couche.

10. Système (100) selon la revendication 6, dans lequel le post-traitement de la nouvelle configuration comprend :
le fait de vérifier si une profondeur d'un tenseur d'entrée pour chacune de la pluralité de couches est égale à une profondeur d'un tenseur de sortie d'une couche immédiatement précédente ; et
le réglage de la profondeur du tenseur d'entrée pour chacune de la pluralité de couches en tant que profondeur du tenseur de sortie de la couche précédente si la profondeur du tenseur d'entrée et la profondeur du tenseur de sortie ne sont pas égales.

11. Un ou plusieurs supports de stockage d'informations lisibles par machine non transitoires comprenant une ou plusieurs instructions qui, lorsqu'elles sont exécutées par un ou plusieurs processeurs matériels (104), amènent :
l'obtention d'un modèle de réseau neuronal profond (DNN), d'un ensemble de données d'apprentissage, et d'une ou plusieurs contraintes, dans lequel les une ou plusieurs contraintes comprennent une taille de modèle cible et une ou plusieurs pénalités de performance, dans lequel la taille de modèle cible aide le modèle DNN à s'adapter dans une mémoire de dispositif périphérique ou de microcontrôleur pour déploiement ; et
la réalisation itérative d'une réduction de taille de modèle sur le modèle DNN jusqu'à ce que les une ou plusieurs contraintes soient satisfaites, pour obtenir un modèle DNN compact, dans lequel à chaque itération, la réduction de taille de modèle comprend :
l'élagage du modèle DNN en utilisant une technique d'élagage pour obtenir un modèle parcimonieux, dans lequel la technique d'élagage règle un ou plusieurs poids dans le modèle DNN à zéro ;
la détermination d'une configuration du modèle parcimonieux, dans lequel la configuration fournit des informations d'état d'une pluralité de couches comprises dans le modèle parcimonieux ;
le calcul d'un taux de sparsité de chacune de la pluralité de couches ;
la mise à jour de la configuration pour obtenir une nouvelle configuration i) en éliminant une ou plusieurs couches parmi la pluralité de couches ayant le taux de sparsité supérieur à une valeur de seuil prédéfinie, et ii) en déterminant un nombre de filtres pour chacune de la pluralité de couches à l'exception des une ou plusieurs couches qui ont été éliminées, sur la base des taux de sparsité associés ;
le post-traitement de la nouvelle configuration pour créer une configuration de modèle cohérente ; et
la génération d'un nouveau modèle DNN sur la base de la configuration de modèle cohérente et l'apprentissage du nouveau modèle DNN en utilisant l'ensemble de données d'apprentissage, dans lequel le nouveau modèle DNN est utilisé dans une itération ultérieure, et dans lequel le nouveau modèle DNN obtenu lorsque les une ou plusieurs contraintes sont satisfaites est déterminé comme étant le modèle DNN compact.

12. Un ou plusieurs supports de stockage d'informations lisibles par machine non transitoires selon la revendication 11, dans lequel les une ou plusieurs pénalités de performance définissent une limite sur des paramètres de performance du modèle DNN compact en termes d'exactitude, de sensibilité, de spécificité, et de score F1 .

13. Un ou plusieurs supports de stockage d'informations lisibles par machine non transitoires selon la revendication 11, dans lequel la configuration comprend des paramètres de chacune de la pluralité de couches, dans lequel les paramètres comprennent une profondeur d'un tenseur d'entrée, une profondeur d'un tenseur de sortie, une taille de noyau, une longueur de pas, un remplissage, et un type de la couche.

14. Un ou plusieurs supports de stockage d'informations lisibles par machine non transitoires selon la revendication 11, dans lequel un taux de sparsité de chacune de la pluralité de couches est calculé en divisant un nombre de poids de valeur nulle par un nombre total de poids dans la couche.

15. Un ou plusieurs supports de stockage d'informations lisibles par machine non transitoires selon la revendication 11, dans lequel le post-traitement de la nouvelle configuration comprend :
le fait de vérifier si une profondeur d'un tenseur d'entrée pour chacune de la pluralité de couches est égale à une profondeur d'un tenseur de sortie d'une couche immédiatement précédente ; et
le réglage de la profondeur du tenseur d'entrée pour chacune de la pluralité de couches en tant que profondeur du tenseur de sortie de la couche précédente si la profondeur du tenseur d'entrée et la profondeur du tenseur de sortie ne sont pas égales.
